# EUROPEAN PATENT APPLICATION

(11) **EP 4 718 111 A1**
(43) Date of publication of application: **01.04.2026**
(21) Application number: 25161200.8
(22) Date of filing: 03.03.2025
(51) Int. Cl.: G01S 7/481, G01S 7/497, G01S 17/89

(54) **DISTANCE MEASUREMENT SYSTEM**

(30) Priority: 26.09.2024 JP 2024167687
(71) Applicant: Fujifilm Business Innovation Corp., Tokyo 107-0052 (JP)
(72) Inventor: SUGIBUCHI, Hiroki, Ebina (JP); SAKITA, Tomoaki, Ebina (JP)
(74) Representative: Meissner Bolte Partnerschaft mbB

(57) **Abstract**

A distance measurement system (1) includes a light emitting unit (4) in which a plurality of light sources is provided, the light sources each including a plurality of light emitting sections capable of emitting light individually, a light receiving unit (5) that receives reflected light from the light emitting unit, and a processor (81) configured to drive the light emitting unit so as to have a first lighting state where one light emitting section that emits light toward one region is turned on in each of the plurality of light sources provided and a second lighting state where a plurality of light emitting sections including the one light emitting section is simultaneously turned on in at least a part of the light sources, acquire a first light reception result, which is a result of light reception by the light receiving unit in a case of the first lighting state, and a second light reception result, which is a result of light reception by the light receiving unit in a case of the second lighting state, and by using the acquired first light reception result and the acquired second light reception result, perform correction processing to correct a distance to the one region measured based on the first light reception result.

## Description

### Background

### (i) Technical Field

The present disclosure relates to a distance measurement system.

### (ii) Related Art

For example, Japanese Unexamined Patent Application Publication No. 2021-153135 discloses a measurement apparatus that includes a light emitting unit including a first light emitting section that emits light toward a first region and a second light emitting section that emits light toward a second region different from the first region. The measurement apparatus further includes a light receiving unit including a first light receiving section that receives light reflected by the first region and a second light receiving section that receives light reflected by the second region. The measurement apparatus further includes an acquisition unit that acquires information on the second region from a result that the light emitted from the first light emitting section is reflected by the second region and received by the second light receiving section.

### Summary

Here, there is a light emitting device in which a plurality of light sources is provided, each including a plurality of light emitting sections. It is assumed that, in each of the plurality of light sources, one light emitting section, which emits light toward one region, enters a lighting state. When the light emitting sections of the plurality of light sources are driven to enter the lighting state only once for one region, it is presumed that the influence of a deviation of the light emitting section with respect to one region increases due to the accuracy, or the like, at the time of assembly of the plurality of light sources. Therefore, when the distance is measured based on the result of reception of the light reflected by the one region, the use of the result of light reception without correction may cause a large error in the distance.

Accordingly, it is an object of the present disclosure to reduce an error in a measured distance as compared with a case where a result of light reception is used without correction.

According to a first aspect of the present disclosure, there is provided a distance measurement system including a light emitting unit in which a plurality of light sources is provided, the light sources each including a plurality of light emitting sections capable of emitting light individually, a light receiving unit that receives reflected light from the light emitting unit, and a processor configured to drive the light emitting unit so as to have a first lighting state where one light emitting section that emits light toward one region is turned on in each of the plurality of light sources provided and a second lighting state where a plurality of light emitting sections including the one light emitting section is simultaneously turned on in at least a part of the light sources, acquire a first light reception result, which is a result of light reception by the light receiving unit in a case of the first lighting state, and a second light reception result, which is a result of light reception by the light receiving unit in a case of the second lighting state, and by using the acquired first light reception result and the acquired second light reception result, perform correction processing to correct a distance to the one region measured based on the first light reception result.

According to a second aspect of the present disclosure, in the distance measurement system according to the first aspect, the processor may be configured to, by using a difference between the first light reception result and the second light reception result, perform processing to correct the distance to the one region measured based on the first light reception result.

According to a third aspect of the present disclosure, in the distance measurement system according to the first or second aspect, the processor may be configured to switch between cases where the light sources in the first lighting state and at least the part of the light sources in the second lighting state are all of the plurality of light sources or a part of the plurality of light sources.

According to a fourth aspect of the present disclosure, in the distance measurement system according to the third aspect, a number of the light sources in the first lighting state may be same as a number of at least the part of the light sources in the second lighting state.

According to a fifth aspect of the present disclosure, in the distance measurement system according to any one of the first to fourth aspects, the processor may be configured to perform the correction processing when the first light reception result satisfies a predetermined condition.

According to a sixth aspect of the present disclosure, in the distance measurement system according to the fifth aspect, the predetermined condition may be that, when the first light reception result is divided into a center and an edge, a difference between the center and the edge is larger than a threshold.

According to a seventh aspect of the present disclosure, in the distance measurement system according to the second aspect, the processor may be configured to, when the difference exceeds a predetermined value, perform processing to reduce an influence of indirect light on the first light reception result before the distance to the one region is corrected.

According to the first aspect of the present disclosure, it is possible to reduce errors in the measured distance as compared to a case where a result of light reception is used without correction.

According to the second aspect of the present disclosure, it is possible to reduce errors in the measured distance as compared to a case where a result of light reception is used without correction.

According to the third aspect of the present disclosure, it is possible to cope with various situations as compared to the case without the configuration in which the processor switches between cases where the light sources in the first lighting state and at least the part of the light sources in the second lighting state are all of the plurality of light sources or a part of the plurality of light sources.

According to the fourth aspect of the present disclosure, it is possible to enhance the effect of correction as compared to the case without the configuration in which the number of the light sources in the first lighting state is the same as the number of at least the part of the light sources in the second lighting state.

According to the fifth aspect of the present disclosure, it is possible to reduce the processing load as compared to the case without the configuration in which the processor performs the correction processing when the first light reception result satisfies a predetermined condition.

According to the sixth aspect of the present disclosure, it is possible to reduce the processing load as compared to the case without the configuration in which the predetermined condition is that, when the first light reception result is divided into a center and an edge, a difference between the center and the edge is larger than a threshold.

According to the seventh aspect of the present disclosure, it is possible to further reduce errors in the measured distance as compared to the case without the configuration in which, when the difference exceeds a predetermined value, the processor performs processing to reduce an influence of indirect light on the first light reception result before the distance to the one region is corrected.

### Brief Description of the Drawings

Exemplary embodiments of the present disclosure will be described in detail based on the following figures, wherein:
Fig. 1 is a block diagram illustrating an example of a schematic configuration of a distance measurement apparatus to which the present exemplary embodiment is applied;
Fig. 2 is a diagram illustrating a relationship between a light emitting surface of a light emitting unit and an irradiation surface irradiated with light emitted from the light emitting unit according to the present exemplary embodiment;
Fig. 3 is a diagram illustrating an example of the light emitting unit according to the present exemplary embodiment;
Fig. 4 is a diagram illustrating a relationship between a light receiving surface of a light receiving unit and the irradiation surface according to the present exemplary embodiment;
Fig. 5 is a diagram illustrating an example of the order in which irradiation sections of the irradiation surface are irradiated;
Figs. 6A to 6C are diagrams illustrating a distance image according to the present exemplary embodiment, Fig. 6A is a diagram illustrating a positional relationship between the distance measurement apparatus and objects, Fig. 6B is a diagram illustrating a state of the irradiation surface, and Fig. 6C is a diagram illustrating an example of a distance image created by a control unit;
Fig. 7 is a perspective view illustrating a schematic configuration example of the distance measurement apparatus to which the present exemplary embodiment is applied;
Figs. 8A and 8B are diagrams illustrating a first mode of the light emitting unit and the light receiving unit, Fig. 8A illustrates a state where a single light emitting section of each of the plurality of light sources is turned on, and Fig. 8B illustrates the light amount distribution of the light receiving section of the light receiving unit in the case of Fig. 8A;
Figs. 9A and 9B are diagrams illustrating a second mode of the light emitting unit and the light receiving unit, Fig. 9A illustrates a state where a plurality of light emitting sections of each of the plurality of light sources is turned on, and Fig. 9B illustrates the light amount distribution of the light receiving section of the light receiving unit in the case of Fig. 9A;
Fig. 10 is a flowchart illustrating a control example associated with lighting of the light sources;
Fig. 11 is a flowchart illustrating a control example when correction is performed;
Fig. 12 is a flowchart illustrating an example of processing to generate and store a correction parameter;
Figs. 13A and 13B are graphs illustrating a case where a distance image is calculated from a divided irradiation image, Fig. 13A illustrates the case of the acquired divided irradiation image, and Fig. 13B illustrates the case of the corrected divided irradiation image;
Fig. 14 is a flowchart illustrating an example of processing including processing to suppress the influence of indirect light;
Figs. 15A and 15B are diagrams illustrating the lighting states of the plurality of light sources according to a modification, Fig. 15A illustrates a state where the single light emitting section is turned on, and Fig. 15B illustrates a state where the plurality of light emitting sections is turned on; and
Figs. 16A and 16B are diagrams illustrating the lighting states of the plurality of light sources according to another modification, Fig. 16A illustrates a state where the single light emitting section is turned on, and Fig. 16B illustrates a state where the plurality of light emitting sections is turned on.

### Detailed Description

An exemplary embodiment of the present disclosure will be described below in detail with reference to the accompanying drawings.

The technical scope of the present disclosure is not limited to the scope described below as an exemplary embodiment. It is apparent from the description of the scope of claims that a combination of a plurality of examples and various modifications or improvements to these examples are also included in the technical scope of the present disclosure.

### <Distance Measurement Apparatus 1>

### (Overall Configuration)

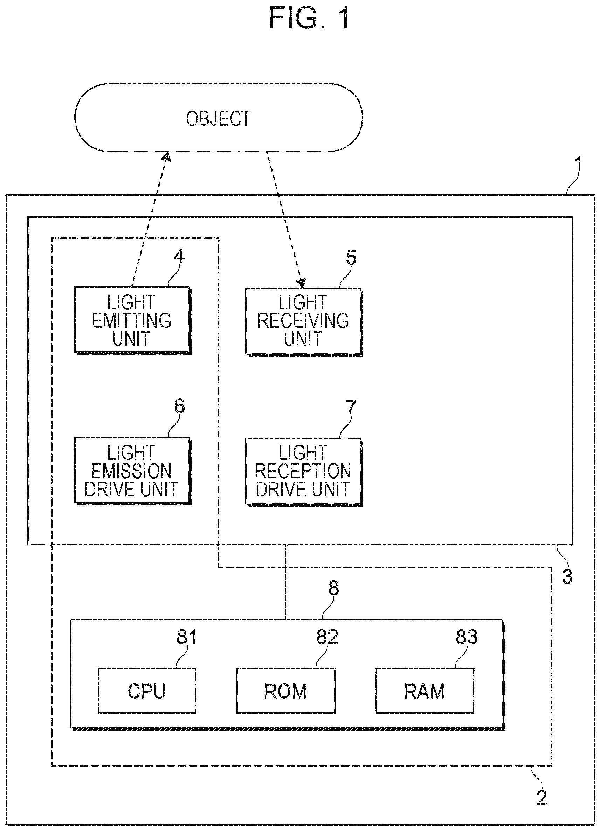

Fig. 1 is a block diagram illustrating an example of a schematic configuration of a distance measurement apparatus 1 to which the present exemplary embodiment is applied.

The distance measurement apparatus 1 measures the distance to an object based on the time from when a light emitting unit 4 emits light to when a light receiving unit 5 receives the light reflected by the object. That is, the distance measurement apparatus 1 is an apparatus that measures a distance based on the ToF method. The ToF method includes an indirect ToF (iToF) method of measuring a time from the difference between the phases of emitted light and received light and a direct ToF (dTOF) method of directly measuring a time from light emission to light reception. In the description according to the present exemplary embodiment, it is assumed that the distance measurement apparatus 1 measures a distance based on the indirect ToF method. The distance measurement apparatus 1 is an example of a distance measurement system.

As illustrated in Fig. 1, the distance measurement apparatus 1 includes an optical device 3 and a control unit 8.

The optical device 3 includes the light emitting unit 4 that emits light toward a predetermined irradiation range, the light receiving unit 5 that receives light that is emitted from the light emitting unit 4 and is reflected by an object existing in the irradiation range, a light emission drive unit 6 that drives the light emitting unit 4, and a light reception drive unit 7 that drives the light receiving unit 5.

The configurations of the light emitting unit 4 and the light receiving unit 5 of the optical device 3 will be described below in detail.

The configuration of the light emitting device 2 is illustrated in a broken line.

The control unit 8 controls operations of the light emitting unit 4 and the light receiving unit 5 of the optical device 3.

Further, the control unit 8 acquires the result of the light reception in the light receiving unit 5 and measures the distance from the distance measurement apparatus 1 to the object by the ToF method based on the result of the light reception.

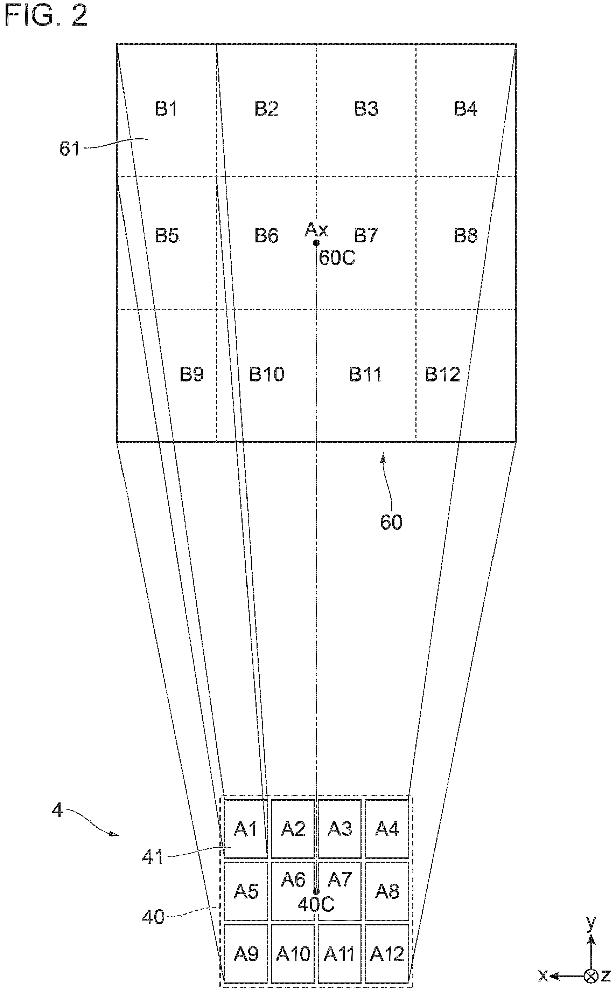

The light receiving unit 5 detects an infrared ray radiated from the object existing in the irradiation range (an irradiation surface 60 in Fig. 2 described below). The control unit 8 generates an infrared image from a detection result. The control unit 8 detects an infrared ray in the irradiation range and generates an infrared image continuously or intermittently at predetermined time intervals.

The control unit 8 analyzes the acquired infrared image to determine the condition of the object in the irradiation range. As the condition of the object in the irradiation range, the control unit 8 determines whether the object is a moving object that moves in the irradiation range or a still obj ect that remains stationary. Further, as the condition of the obj ect in the irradiation range, the control unit 8 determines which irradiation section 61 (see Fig. 2 described below) the object exists in the irradiation range. Furthermore, when the object is a moving object, the control unit 8 determines, as the condition of the object in the irradiation range, the moving direction of the object in the irradiation range and the relative movement amount of the object in the irradiation range.

### (Light Emitting Unit 4)

Fig. 2 is a diagram illustrating a relationship between a light emitting surface 40 of the light emitting unit 4 and an irradiation surface 60 irradiated with light emitted from the light emitting unit 4 according to the present exemplary embodiment. In Fig. 2, the left direction of the paper surface is +x direction, the upward direction of the paper surface is +y direction, the back side direction of the paper surface is +z direction, and the opposite directions thereof are - x, -y, and -z directions. In Fig. 2, the light emitting surface 40 and the irradiation surface 60 are illustrated to be shifted in the vertical direction (±y direction) of the paper surface, but in fact, the light emitting surface 40 and the irradiation surface 60 are arranged to face each other. In Fig. 2, the light emitting surface 40 of the light emitting unit 4 is located in the front side direction (-z direction) of the paper surface, and the irradiation surface 60 is located in the back side direction (+z direction) of the paper surface. That is, Fig. 2 illustrates a state where the light emitting unit 4 emitting the light to the irradiation surface 60 is viewed from the side opposite to the side from which the light emitting unit 4 emits the light.

The light emitting unit 4 includes, for example, one or more light emitting chips.

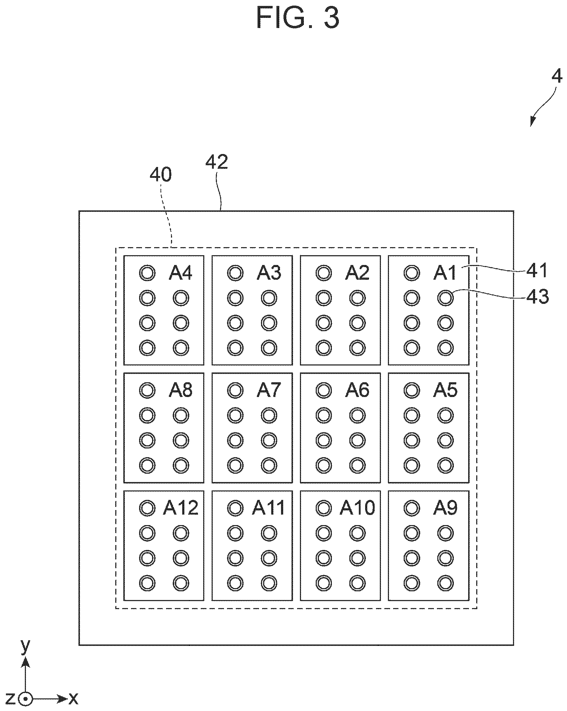

The light emitting unit 4 includes the light emitting surface 40 on which a plurality of vertical cavity surface emitting lasers (VCSELs) 43 (see Fig. 3 described below) is provided. The light emitting unit 4 emits the light toward the irradiation surface 60 by the light emission of the VCSEL 43. The VCSELs 43 are not illustrated in Fig. 2.

As described below, the light emitting unit 4 may include the plurality of light emitting surfaces 40.

The light emitting surface 40 is divided into a plurality of light emitting sections 41 that includes at least the one VCSEL 43. Here, as an example, the light emitting surface 40 is divided into four in the x direction and three in the y direction, the twelve light emitting sections 41 in total. As illustrated, when it is necessary to distinguish each of the light emitting sections 41, the light emitting sections 41 are distinguished as light emitting sections A1 to A12 in order, starting from the upper left side (the end in the +x direction and the +y direction) in Fig. 2.

In this specification, "to" indicates a plurality of constituent elements distinguished from each other by numbers and means to include the constituent elements described before and after "to" and the constituent elements with the numbers therebetween. For example, the light emitting sections A1 to A12 include the twelve light emitting sections 41, from the light emitting section A1 to the light emitting section A12 in numerical order.

Each of the light emitting sections 41 is independently driven by the light emission drive unit 6 (see Fig. 1) to perform a light emitting operation. In other words, each of the light emitting sections 41 emits light when the light emission drive unit 6 supplies the electric power to the VCSEL 43 included in the light emitting section 41. According to the present exemplary embodiment, the VCSEL 43 emits the light with the electric power supplied to the VCSEL 43 included in each of the light emitting sections 41 and with the supplied electric power. The amount of light accordingly emitted from each of the light emitting sections 41 can be adjusted in accordance with an environment such as the brightness in the irradiation range, operations by a user of the distance measurement apparatus 1, etc.

According to the present exemplary embodiment, the driving of the light emitting section 41 refers to the light emission by supplying the electric power to the VCSEL 43 included in the light emitting section 41, and the light emitting operation refers to the light emission of the VCSEL 43 included in the light emitting section 41 during a predetermined light emission period.

In addition, "independently driven" refers to a state where each of the light emitting sections 41 is driven to emit light. The light emission drive unit 6 drives each of the light emitting sections 41 in response to a control signal from the control unit 8 (see Fig. 1). Therefore, all the light emitting sections 41 do not necessarily emit the light at the same time, and for example, in the example of Fig. 2, there may be a state where the light emitting section A1 is emitting the light but the light emitting section A12 is not emitting the light.

The irradiation surface 60 is a surface which is orthogonal to the direction in which the light is emitted at a certain distance in the direction (+z direction) in which the light is emitted from a center 40C of the light emitting surface 40 and which is irradiated with the light from the light emitting unit 4.

In the example of Fig. 2, since the light emitting unit 4 emits the light toward the +z direction, the irradiation surface 60 spreads in the x direction and the y direction at a certain distance in the +z direction. Here, a central axis Ax (dash-dot-dot line) passing through a center 60C of the irradiation surface 60 and the center 40C of the light emitting surface 40 is perpendicular to the light emitting surface 40 and the irradiation surface 60. According to the present exemplary embodiment, the irradiation surface 60 has a rectangular shape corresponding to the rectangular shape of the light emitting surface 40.

As illustrated, the irradiation surface 60 is divided into a plurality of irradiation sections 61 corresponding to the light emitting sections 41 on the light emitting surface 40. In the example of Fig. 2, the irradiation surface 60 is divided into four in the x direction and three in the y direction, the twelve irradiation sections 61. When the irradiation sections 61 need to be distinguished from each other, the irradiation sections 61 are denoted as irradiation sections B1 to B12 in order, starting from the upper left side (the end in the +x direction and the +y direction) in Fig. 2.

A light emitting section Ai to which the same number i is assigned as a certain irradiation section Bi may be referred to as the "corresponding light emitting section". For example, the light emitting section A1 is a light emitting section corresponding to the irradiation section B1. Conversely, the irradiation section Bi to which the same number i is assigned as the certain light emitting section Ai may be referred to as the "corresponding irradiation section".

The irradiation sections B1 to B12 are arranged in plane symmetry with the light emitting sections A1 to A12 with respect to the xy plane. For example, in Fig. 2, the arrangement of the irradiation sections B1, B2, B3, and B4 in this order in the -x direction corresponds to the arrangement of the light emitting sections A1, A2, A3, and A4 in this order in the -x direction.

Each of the light emitting sections 41 emits light toward the corresponding irradiation section 61. Each of the irradiation sections 61 is irradiated with the light emitted from the corresponding light emitting section 41. Here, the light emitting section 41 emitting the light toward the corresponding irradiation section 61 means that the optical axis of the light emitted from each of the light emitting sections 41 is directed toward the corresponding irradiation section 61. There is no limitation on that all of the lights emitted from the light emitting sections 41 are emitted to the corresponding irradiation sections 61. In other words, a part of the light emitted from the certain light emitting section 41 may be emitted to the irradiation section 61 different from the corresponding irradiation section 61 or outside the range of the irradiation surface 60.

Fig. 3 is a diagram illustrating an example of the light emitting unit 4 according to the present exemplary embodiment. In contrast to Fig. 2, Fig. 3 illustrates a state viewed from the side where the light emitting unit 4 emits light. Therefore, in Fig. 3, the rightward direction of the paper surface is the +x direction, the upward direction of the paper surface is the +y direction, and the front direction of the paper surface is the +z direction.

As illustrated in Fig. 3, the light emitting unit 4 includes a substrate 42 and the light emitting surface 40 on which the plurality of the VCSELs 43 is provided. More specifically, the substrate 42 and the light emitting surface 40 are provided to overlap each other in the direction in which the light is emitted (+z direction, the front direction of the paper surface). The wiring for supplying electric power and exchanging electric signals, electronic components related to operations of the light emitting unit 4, and the like, may be formed on or attached to the substrate 42, but the description thereof is omitted.

As described above, the light emitting unit 4 includes the twelve light emitting sections 41 (the light emitting sections A1 to A12) in which the VCSELs 43 are arranged on the light emitting surface 40. As illustrated in Fig. 3, all the light emitting sections A1 to A12 have the same size. Further, in each of the light emitting sections A1 to A12, the same number (seven in this example) of the VCSELs 43 are arranged.

The sizes of the light emitting sections 41 and the number of the VCSELs 43 to be arranged are not limited, and some or all of the light emitting sections 41 may have different sizes, and different numbers of the VCSELs 43 may be arranged.

The light emitted from each of the light emitting sections 41 of the light emitting unit 4 is spread in a plane perpendicular to the emission direction (the axial direction of the central axis Ax) by an irradiation lens unit (not illustrated) and is emitted to the irradiation surface 60. The irradiation lens unit may be an optical member such as a diffusion plate which is provided on the optical path of the light and diffuses the light by scattering or the like, a diffractive optical element (DOE) which changes the angle of the incident light and emits the light, and/or a lens.

### (Light Receiving Unit 5)

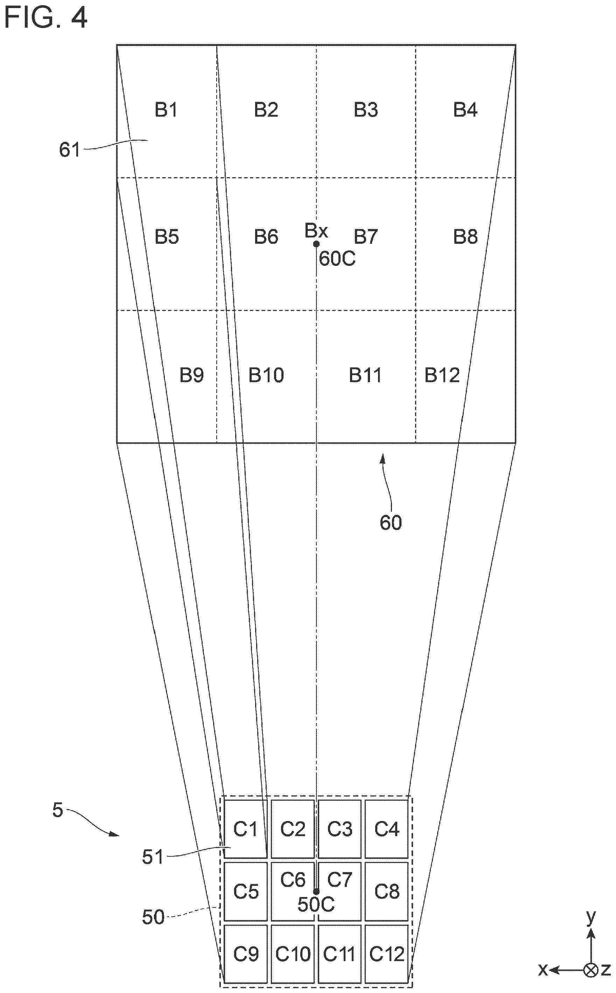

Fig. 4 is a diagram illustrating a relationship between the light receiving surface 50 of the light receiving unit 5 and the irradiation surface 60 described above according to the present exemplary embodiment. In Fig. 4, similarly to Fig. 2, the leftward direction of the paper surface is the +x direction, the upward direction of the paper surface is the +y direction, the back side direction of the paper surface is the z direction, and the opposite directions thereof are -x, -y, and -z directions. In Fig. 4, the light receiving surface 50 and the irradiation surface 60 are illustrated to be shifted in the vertical direction (±y direction) of the paper surface, but in fact, the light receiving surface 50 and the irradiation surface 60 are arranged to face each other. In Fig. 4, the light receiving unit 5 (the light receiving surface 50) is located on the front side direction (-z direction) of the paper surface, and the irradiation surface 60 is located on the back side direction (+z direction) of the paper surface. That is, Fig. 4 illustrates a state where the light receiving unit 5 receiving the light reflected from the irradiation surface 60 is viewed from the side opposite to the side where the light receiving unit 5 receives the light.

The light receiving unit 5 includes the light receiving surface 50 which spreads in the x direction and the y direction and on which a plurality of light receiving elements (not illustrated) is arranged. Then, the light receiving unit 5 receives, by the respective light receiving elements, the light emitted from the light emitting unit 4 and reflected by the object existing on the irradiation surface 60.

A central axis Bx (dash-dot-dot line) passing through the center 60C of the irradiation surface 60 and a center 50C of the light receiving surface 50 is perpendicular to the irradiation surface 60 and the light receiving surface 50. According to the present exemplary embodiment, the light receiving surface 50 has a rectangular shape, similarly to the light emitting surface 40 (see Fig. 2) and the irradiation surface 60.

The light receiving surface 50 is divided into a plurality of light receiving sections 51 corresponding to the light emitting sections 41 (see Fig. 2) of the light emitting surface 40 (see Fig. 2) and the irradiation sections 61 of the irradiation surface 60. In the example of Fig. 4, the light receiving surface 50 is divided into four in the x direction and three in the y direction, the twelve light receiving sections 51. When the light receiving sections 51 need to be distinguished from each other, the light receiving sections 51 are distinguished as light receiving sections C1 to C12 in order, starting from the upper left side (the end in the +x direction and the +y direction) in Fig. 4.

A light receiving section Ci to which the same number i is assigned as the certain light emitting section Ai or the certain irradiation section Bi may be referred to as the "corresponding light receiving section". For example, the light receiving section C1 is a light receiving section corresponding to the light emitting section A1 or the irradiation section B1. Conversely, the light emitting section Ai to which the same number is assigned as the certain light receiving section Ci may be referred to as the "corresponding light emitting section", and the irradiation section Bi to which the same number is assigned as the certain light receiving section Ci may be referred to as the "corresponding irradiation section".

The light receiving sections C1 to C12 are arranged in plane symmetry with the irradiation sections B1 to B12 with respect to the xy plane. For example, in Fig. 4, the arrangement of the irradiation sections B1, B2, B3, and B4 in this order in the -x direction corresponds to the arrangement of the light receiving sections C1, C2, C3, and C4 in this order in the -x direction.

Each of the light receiving sections 51 receives the light emitted from the light emitting unit 4 and reflected by an object existing in the corresponding irradiation section 61.

Each of the light receiving sections 51 includes a plurality of light receiving elements that are regularly arranged. Each of the light receiving elements can receive the light emitted from the light emitting unit 4 and reflected by an object existing on the irradiation surface 60 and output an electric signal in accordance with the received light. Examples of the light receiving element may include a photodiode or a phototransistor.

Each of the light receiving sections 51 is independently driven by the light reception drive unit 7 (see Fig. 1) to perform a light receiving operation. Here, the driving of the light receiving section 51 refers to bringing the light receiving section 51 into a state where electric charges can be accumulated in accordance with the light reception by the light receiving element, and the light receiving operation refers to the light receiving element of the light receiving section 51 accumulating electric charges in accordance with the light reception. In addition, "independently driven" refers to a state where each of the light receiving sections 51 is driven so that the electric charges corresponding to the light reception can be accumulated. The light reception drive unit 7 drives each of the light receiving sections 51 in response to a control signal from the control unit 8 (see Fig. 1).

The light receiving unit 5 outputs, to the control unit 8, the electric charges accumulated in the light receiving section 51, i.e., the electric signal corresponding to the result of light reception in the light receiving section 51, in accordance with a reading operation (the details will be described below) of the control unit 8.

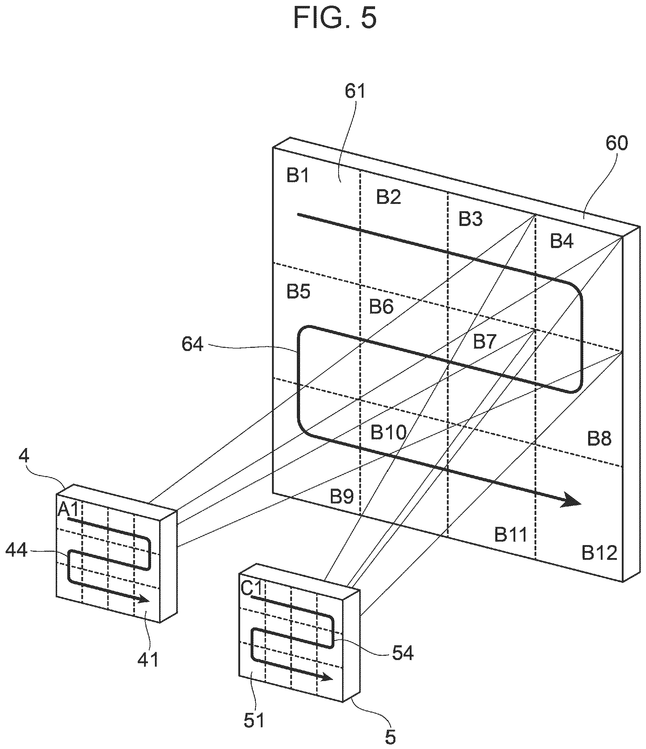

Fig. 5 is a diagram illustrating an example of the order in which the irradiation sections 61 of the irradiation surface 60 are irradiated.

In an example of the order illustrated in Fig. 5, the irradiation sections 61 are sequentially irradiated in the direction of an arrow 64. Specifically, when the irradiation sections 61 are divided into an upper stage, a middle stage, and a lower stage, the irradiation sections B1 to B4 of the upper stage, the irradiation sections B5 to B8 of the middle stage, and the irradiation sections B9 to B12 of the lower stage are irradiated in this order. In the upper stage, the irradiation sections B1 to B4 are irradiated in this order. In the case of the middle stage, the irradiation sections B8 to B5 are irradiated in this order, which is opposite to the direction in the case of the upper stage. In the lower stage, the irradiation sections B9 to B12 are irradiated in this order, which is the same as the direction in the case of the upper stage.

The light emitting sections 41 of the light emitting unit 4 are driven to emit light in the order of an arrow 44 so that the irradiation sections 61 are irradiated in the order of the arrow 64. The light receiving sections 51 of the light receiving unit 5 are driven to receive the reflected light from the irradiation sections 61 in the order of the arrow 54 corresponding to the arrow 64.

### (Control Unit 8)

Referring back to Fig. 1, the control unit 8 includes a central processing unit (CPU) 81, a read only memory (ROM) 82, and a random access memory (RAM) 83.

The CPU 81 is an example of a processor, and realizes each function described below by loading various programs stored in the ROM 82 or the like into the RAM 83 and executing the programs. The RAM 83 is a memory used as a working memory or the like of the CPU 81. The ROM 82 is a memory that stores various programs to be executed by the CPU 81.

Here, the program executed by the CPU 81 may be provided in a state of being stored in a computer-readable recording medium such as a magnetic recording medium (magnetic tape, magnetic disk, and the like), optical recording medium (optical disk and the like), magnetooptical recording medium, and semi-conductor memory. In addition, the program executed by the CPU 81 may be provided using a communication way such as the Internet.

According to the present exemplary embodiment, an arbitrary computer executes each processing. In addition, the arbitrary computer may execute each processing by a processor as hardware, a program as software, or a combination thereof. In this case, the processor is configured to execute various types of processing according to the present exemplary embodiment in cooperation with the program, and can function as each unit or each means according to the present exemplary embodiment. In addition, the execution order of the processing by the processor is not limited to the described order, and may be appropriately changed. The arbitrary computer may be a general purpose computer, a special purpose computer, a workstation, or any other system capable of performing each processing.

The processor may be configured by one or more pieces of hardware, and the type of hardware is not limited. For example, the processor may be configured by hardware such as a central processing unit (CPU), a micro processing unit (MPU), a programmable logic device such as a field programmable gate array (FPGA), a dedicated circuit for executing specific processing such as an application specific integrated circuit (ASIC), a graphic processing unit (GPU), or a neural processing unit (NPU). Further, the type of hardware may be a combination of different types of hardware. When a plurality of pieces of hardware is configured to execute one or more processes of a certain processor, the plurality of pieces of hardware may exist in devices physically separated from each other, or may exist in the same device. In addition, according to any exemplary embodiment, the order of the processes performed by the processor is not limited to the order described above, and may be appropriately changed. The hardware is configured by an electric circuit (circuitry) in which circuit elements such as semiconductor elements are combined.

Further, the program may be software such as firmware or microcode. In addition, the program may be, for example, a program module group, and each function thereof may be realized by a processor configured to execute each function. The program may be a program code or a plurality of code segments stored in one or more non-transitory computer-readable media (e.g., storage media or other storage). The program may be divided and stored in a plurality of non-transitory computer-readable media that exist in devices physically separated from each other. The program code or the code segments may represent procedures, functions, subprograms, routines, subroutines, modules, software packages, classes, or any combination of instructions, data structures, or program statements. The program code or the code segments may be coupled to other code segments or hardware circuits by transmitting and receiving information, data, arguments, parameters, or memory contents.

The control unit 8 controls the light emitting operation of the light emitting unit 4 through the light emission drive unit 6 and controls the light receiving operation of the light receiving unit 5 through the light reception drive unit 7.

Further, the control unit 8 performs a reading operation on the light receiving unit 5 through the light reception drive unit 7. Here, the "reading operation" means that the control unit 8 controls the light receiving unit 5 through the light reception drive unit 7 to output the electric signal corresponding to the result of light reception of the light receiving element in the light receiving section 51 and acquires the electric signal as the result of light reception of each of the light receiving sections 51. The control unit 8 according to the present exemplary embodiment can perform the reading operation independently for each of the light receiving sections 51. For example, when the certain light receiving section Ci and another light receiving section Cj perform the light receiving operation and accumulate electric charges, it is possible to perform not only the reading operation for both the light receiving section Ci and the light receiving section Cj but also the reading operation for only the light receiving section Ci.

The control unit 8 measures the distance of each of the irradiation sections 61 based on the result of light reception in each of the light receiving sections 51. Then, the control unit 8 collects the results of the distance measurement in the respective irradiation sections 61 and creates a distance image representing the distance between the distance measurement apparatus 1 and the object. More specifically, the control unit 8 performs predetermined arithmetic processing on the four electric signals acquired from the light receiving unit 5 as results of the four light receptions in each of the light receiving sections 51. Thus, the distance between the distance measurement apparatus 1 and the object in each of the irradiation sections 61 of the irradiation surface 60 is calculated (distance measurement), and the distance image is created.

### <Distance Image 100>

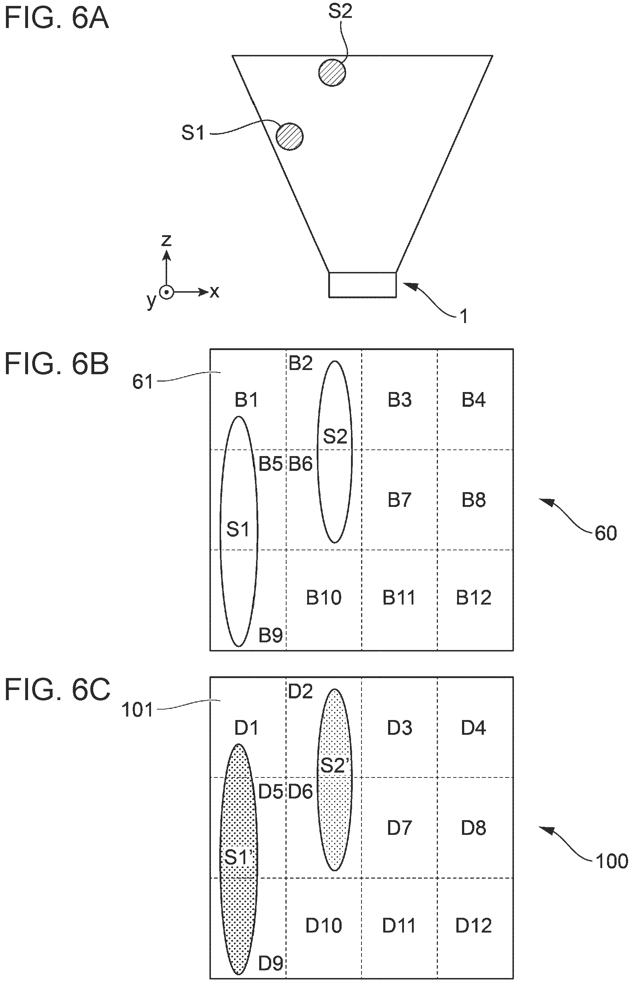

Figs. 6A to 6C are diagrams illustrating a distance image 100 according to the present exemplary embodiment. Fig. 6A is a diagram illustrating a positional relationship between the distance measurement apparatus 1 and objects S1 and S2. Fig. 6B is a diagram illustrating a state of the irradiation surface 60. Fig. 6C is a diagram illustrating an example of the distance image 100 created by the control unit 8.

The distance image 100 illustrated in Fig. 6C is created as a result of distance measurement performed on all the irradiation sections 61 on the irradiation surface 60. In the example of Figs. 6A to 6C, it is assumed that the objects S1 and S2 (may be referred to as objects S without being distinguished from each other) remains stationary and the position relative to the distance measurement apparatus 1 does not change at least during the period from the start to the completion of the distance measurement necessary for creating the distance image 100 in the distance measurement apparatus 1.

As illustrated in Fig. 6C, the distance image 100 has a plurality of image sections 101 corresponding to the light emitting sections 41 of the light emitting surface 40, the irradiation sections 61 of the irradiation surface 60, and the light receiving sections 51 of the light receiving surface 50 (see Figs. 2 and 4). In the example of Fig. 6C, the distance image 100 includes the twelve image sections 101, four of which are arranged in the right-left direction of the drawing corresponding to the ±x direction of the irradiation surface 60 and the light receiving surface 50 and three of which are arranged in the vertical direction of the drawing corresponding to the ±y direction. When the image sections 101 need to be distinguished from each other, the image sections 101 are distinguished as image sections D1 to D12 in order from the upper left side in Fig. 6C.

An image section Di in the distance image 100 is an image obtained based on the light that is emitted from the light emitting section Ai of the light emitting surface 40, reflected by the object in the irradiation section Bi of the irradiation surface 60, and received by the light receiving section Ci of the light receiving surface 50. The image section Di to which the same number i is assigned as the light emitting section Ai, the irradiation section Bi, and the light receiving section Ci may be referred to as the "corresponding image section". Conversely, the light emitting section Ai to which the same number i is assigned as the image section Di may be referred to as the "corresponding light emitting section". In addition, the irradiation section Bi to which the same number i is assigned as the image section Di may be referred to as the "corresponding irradiation section", and the light receiving section Ci to which the same number i is assigned as the image section Di may be referred to as the "corresponding light receiving section".

Each of the image sections 101 of the distance image 100 has a plurality of pixels (not illustrated) associated with the plurality of light receiving elements of the corresponding light receiving section 51. In the distance image 100, the pixel value of each pixel of the image section 101 corresponds to the distance from the distance measurement apparatus 1 to the object, which is calculated from the electric signal from each light receiving element of the light receiving section 51.

In the example illustrated in Fig. 6A, the objects S1 and S2 exist at positions away from the distance measurement apparatus 1 by certain distances. As illustrated in Fig. 6B, the object S1 in this example exists in the range extending over the irradiation sections B1, B5, and B9 of the irradiation surface 60, and the object S2 exists in the range extending over the irradiation sections B2 and B6. The distance from the distance measurement apparatus 1 to the object S1 (for example, about 1 m) is shorter than the distance from the distance measurement apparatus 1 to the object S2 (for example, about 3 m).

Then, as illustrated in Fig. 6C, in the distance image 100, an image S1' representing the object S1 and an image S2' representing the object S2 (which may be referred to as images S' without distinction) are depicted by the pixels included in the image sections 101. More specifically, the image S1' is depicted over the image sections D1, D5, and D9 corresponding to the irradiation sections B1, B5, and B9 in the distance image 100, and the image S2' is depicted over the image sections D2 and D6 corresponding to the irradiation sections B2 and B6 in the distance image 100.

In this example, the pixel values (represented by hatching in Fig. 6C) of the pixels constituting the image S1' and the image S2' in the distance image 100 make it possible to obtain the information on the distance from the distance measurement apparatus 1 to the object S1 and the distance from the distance measurement apparatus 1 to the object S2.

Since the distance image 100 includes the information on the distance between each point on the surface of the object S and the distance measurement apparatus 1, it may also be considered that the distance image 100 includes information on the three-dimensional shape of the object S. Therefore, the distance measurement apparatus 1 to which the present exemplary embodiment is applied can also be used for three-dimensional measurement.

### <Schematic Configuration Example of Distance Measurement Apparatus 1>

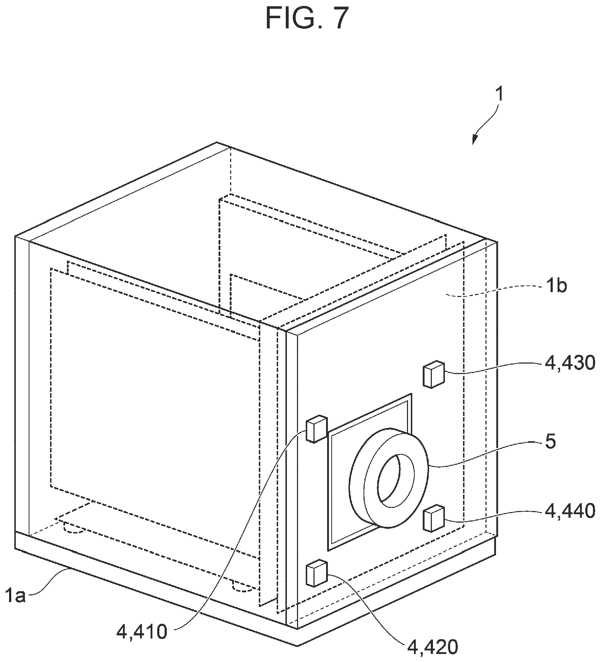

Fig. 7 is a perspective view illustrating a schematic configuration example of the distance measurement apparatus 1 to which the present exemplary embodiment is applied.

The distance measurement apparatus 1 illustrated in Fig. 7 includes at least a housing 1a and a printed board 1b accommodated in the housing 1a. In Fig. 7, a part of the housing 1a is not illustrated.

The light emitting unit 4 and the light receiving unit 5 forming the optical device 3 are mounted on the printed board 1b. In addition, the CPU 81, the ROM 82, and the RAM 83 (see Fig. 1) forming the control unit 8 are mounted on the printed board 1b.

More specifically, in the configuration example illustrated in Fig. 7, the light emitting unit 4 includes four light sources 410, 420, 430, and 440. Each of the light sources 410 to 440 has the light emitting surface 40 (see, for example, Fig. 3) that is divided into the plurality of light emitting sections 41. The light sources 410 to 440 are arranged around the light receiving unit 5.

Although Fig. 7 illustrates an example in which the four light sources 410 to 440 are provided, the number of light sources is not limited to four and, for example, two, three, or five light sources may be provided as long as the plurality of light sources is provided.

Here, in a case where the light emitting unit 4 includes the plurality of light sources 410 to 440, it is assumed that for example the irradiation section B1 among the irradiation sections B1 to B12 (for example, see Fig. 2) of the irradiation surface 60 is irradiated with the light from the light emitting section A1 of each of the plurality of light sources 410 to 440. When the light is irradiated from the light emitting sections A1 of the plurality of light sources 410 to 440, it is possible to irradiate the irradiation section B1 (see Fig. 2) with a higher energy density, as compared to a case where the light is irradiated from the light emitting section A1 of any one of the light sources, for example, the light source 410. Furthermore, when the irradiation section B1 is irradiated with light from each of the light emitting sections A1 of the plurality of light sources 410 to 440, the exposure time of the light receiving element (not illustrated) in the light receiving section C1 (see Fig. 4) of the light receiving unit 5 can be shortened, which makes it possible to reduce the capture of global components that are background light. Therefore, outdoor long-range distance measurement can be performed.

However, it is difficult to match the irradiation area for, for example, the irradiation section 61 (for example, see Fig. 2) of the irradiation surface 60 by the plurality of light sources 410 to 440 and the light receiving area for the light receiving section 51 corresponding to the irradiation section 61 due to variations or the like at the time of assembly. For this reason, a deviation with respect to the irradiation section 61 may occur, and a distance measurement error may increase.

Therefore, in the configuration adopted according to the present exemplary embodiment, distance measurement errors are suppressed even in a case where a deviation with respect to the irradiation section 61 occurs due to the light emitting sections 41 of the plurality of light sources 410 to 440. This will be described below.

A configuration for suppressing a distance measurement error will be described. A first mode and a second mode for the light emitting unit 4 and the light receiving unit 5 will be described below. All the light sources of the light emitting unit 4 in the distance measurement apparatus 1 are the plurality of light sources 410 to 440. In the lighting states of the first mode and the second mode, the four light sources 410 to 440 are simultaneously turned on. In the lighting state, at least two or more light sources are simultaneously turned on. Therefore, when all the light sources of the light emitting unit 4 are three or more light sources, there may be a light source that is not turned on.

### <First Mode of Light Emitting Unit 4 and Light Receiving Unit 5>

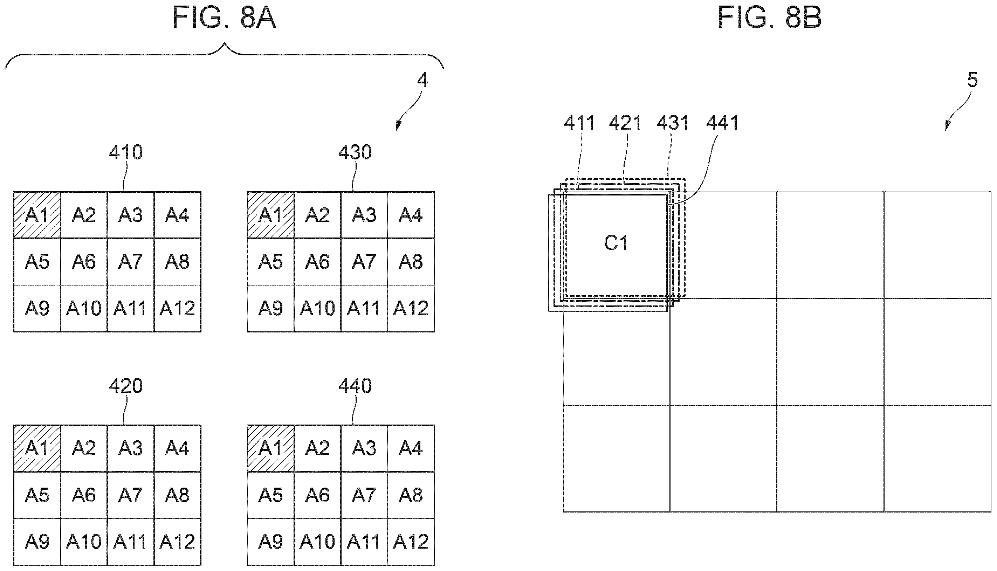

Figs. 8A and 8B are diagrams illustrating the first mode of the light emitting unit 4 and the light receiving unit 5. Fig. 8A illustrates a state where the single light emitting section A1 of each of the plurality of light sources 410 to 440 is turned on, and Fig. 8B illustrates the light amount distribution of the light receiving section of the light receiving unit 5 in the case of Fig. 8A.

The lighting state of the light emitting unit 4 illustrated in Fig. 8A is a state where the light emitting section A1 of each of the plurality of light sources 410 to 440 is turned on. That is, all the four light sources 410 to 440 are turned on (four lighting). In addition, only the one light emitting section A1 is turned on, and the other light emitting sections A2 to A12 are not turned on.

As illustrated in Fig. 8B, the lights from the light sources 410 to 440 are received by the light receiving section C1 of the light receiving unit 5. Such light reception is divided light reception performed for each light receiving section with respect to the light receiving unit 5.

However, due to the variations at the time of assembly described above, the lights from the light sources 410 to 440 (for example, see Fig. 8B) are received by the light receiving section C1 of the light receiving unit 5 in a deviated manner. The light of the light source 410 is in a region 411 indicated by a dash-dot-dot line, and the light of the light source 420 is in a region 421 indicated by a dash-dot line. The light of the light source 430 is in a region 431 indicated by a broken line, and the light of the light source 440 is in a region 441 indicated by a solid line.

The irradiation in this case may be referred to as divided irradiation.

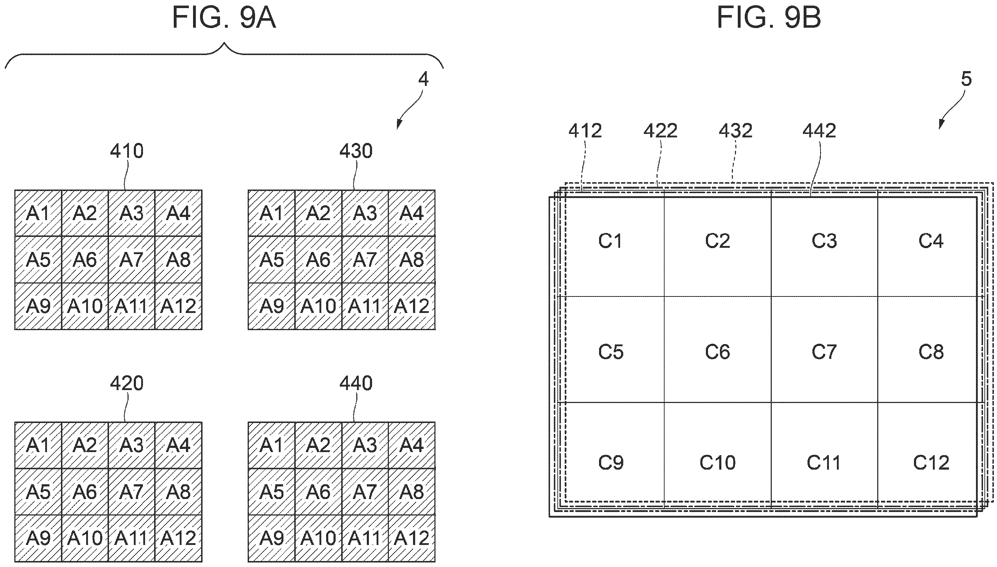

Figs. 9A and 9B are diagrams illustrating the second mode of the light emitting unit 4 and the light receiving unit 5. Fig. 9A illustrates a state where the plurality of light emitting sections A1 to A12 of each of the plurality of light sources 410 to 440 are turned on, and Fig. 9B illustrates the light amount distribution of the light receiving section of the light receiving unit 5 in the case of Fig. 9A.

The lighting state of the light emitting unit 4 illustrated in Fig. 9A is a state where all of the plurality of light sources 410 to 440 are turned on (four lighting). The light emitting sections A1 to A12 are turned on in the light sources 410 to 440.

In the example illustrated in Fig. 9B, the light of the light source 410 is in a region 412 indicated by a dash-dot-dot line, and the light of the light source 420 is in a region 422 indicated by a dash-dot line. The light of the light source 430 is in a region 432 indicated by a broken line, and the light of the light source 440 is in a region 442 indicated by a solid line.

The light receiving section C1 and the like are illustrated in Figs. 8B and 9B, but can also be regarded as the irradiation section B1 (see Fig. 4) and the like. Specifically, the case illustrated in Fig. 8A is partial lighting of the light emitting sections A1 to A12, and divided irradiation is performed on the irradiation surface 60 (see Fig. 2). The case illustrated in Fig. 9A is full lighting of the light emitting sections A1 to A12, and full irradiation is performed on the irradiation surface 60 (see Fig. 2). The image acquired by full irradiation may be referred to as a full irradiation image.

In this case, the irradiation section B1 is an example of one region, and the light emitting section A1 is an example of one light emitting section. The light emitting sections A1 to A12 are examples of a plurality of light emitting sections. The light sources 410 to 440 are examples of a plurality of light sources provided and are examples of at least a part of the light sources.

The lighting of the light sources 410 to 440 illustrated in Fig. 8A is an example of a first lighting state, and the lighting of the light sources 410 to 440 illustrated in Fig. 9A is an example of a second lighting state.

Here, it is possible to switch between the first mode of the light emitting unit 4 illustrated in Fig. 8A and the second mode of the light emitting unit 4 illustrated in Fig. 9A.

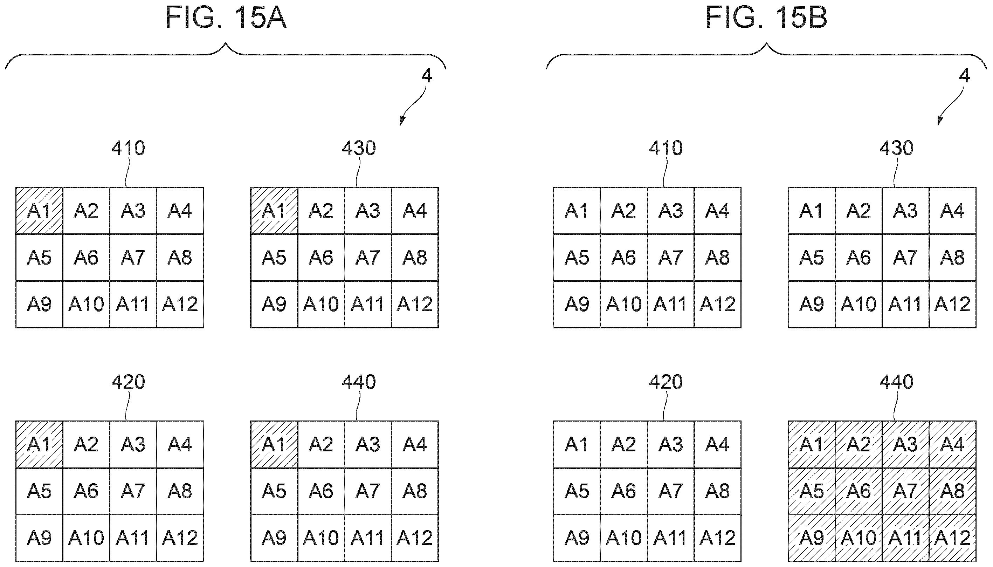

In the first mode and the second mode illustrated in Figs. 8A and 9A, the four light sources 410 to 440 are turned on. That is, the number of light sources turned on in the first mode and the number of light sources turned on in the second mode are the same, but the numbers may also be different from each other. That is, any two or three light sources among the four light sources 410 to 440 may be turned on in the first mode. In addition, only one light source among the plurality of light sources 410 to 440 may also be turned on in the second mode (see Fig. 15B described below).

### <Control Example>

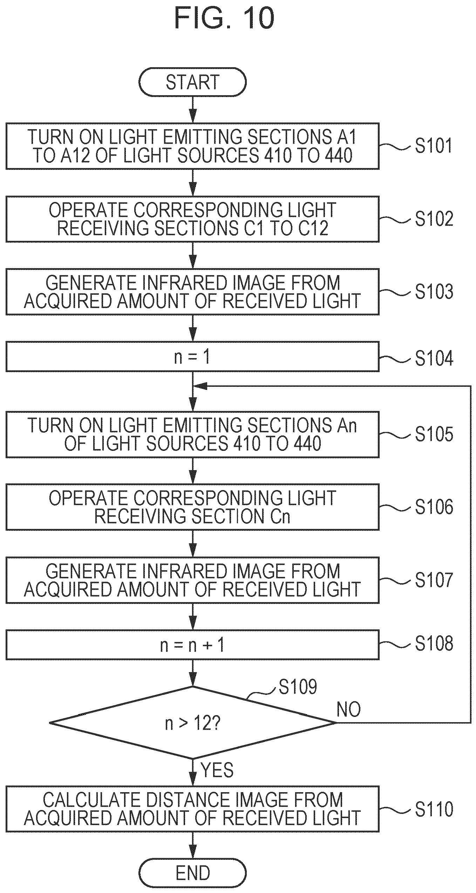

Fig. 10 is a flowchart illustrating a control example associated with lighting of the light sources 410 to 440. The control unit 8 performs this control example (see Fig. 1).

In the control example illustrated in Fig. 10, the light emitting sections A1 to A12 of the light sources 410 to 440 are turned on (see Fig. 9A) (step S101). Further, the corresponding light receiving sections C1 to C12 (see Fig. 9B) are operated (step S102). Accordingly, the infrared image 100 (see Fig. 6C), which is a full irradiation image, is generated from the acquired amount of received light (step S103). The light emitting sections A1 to A12 are simultaneously turned on, and the light receiving sections C1 to C12 are simultaneously operated. In this case, the acquired infrared image 100 may be referred to as "flash image".

After the variable n is set to 1 (step S104), the light emitting sections An of the light sources 410 to 440 are turned on (step S105). In this case, the light emitting sections A1 of the light sources 410 to 440 are turned on (see Fig. 8A). Furthermore, the corresponding light receiving section C1 (see Fig. 8B) is operated (step S106). Accordingly, the infrared image 100 (see Fig. 6C) at the time of turning on the light emitting section A1 is generated from the acquired amount of received light (step S107).

Then, the variable n is incremented by one (step S108), and it is determined whether the variable n exceeds 12 (step S109). When the variable n does not exceed 12 (No in step S109), the process returns to step S105. For example, when the variable n is 2, the light emitting sections A2 of the light sources 410 to 440 are turned on (see, for example, Fig. 8A). Then, the light emitting sections An of the light sources 410 to 440 are turned on until the variable n reaches 12 from 3, and accordingly, the corresponding light receiving section Cn is operated.

In this way, by sequentially turning on the light emitting sections A1 to A12 of the light sources 410 to 440 and operating the corresponding light receiving sections C1 to C12, the respective infrared images 100 are acquired. The sequentially acquired infrared images 100 may be referred to as "divided irradiation images". Such a divided irradiation image may be referred to as a "scanned image".

When the variable n exceeds 12 (Yes in step S109), a distance image is calculated from the acquired amount of received light (step S110), and then the process is terminated.

In this calculation, the full irradiation image is added to the divided irradiation image. This makes it possible to reduce an error in the measured distance.

The divided irradiation image is an example of a first light reception result, and the full irradiation image is an example of a second light reception result.

In the control example illustrated in Fig. 10, in a case where each of the plurality of light sources 410 to 440 is driven to the first lighting state once each time, the plurality of light sources 410 to 440 are driven to the second lighting state once. That is, the driving is performed for the second lighting state once for every 12 times the driving is performed for the first lighting state. Thus, the number of times the driving is performed for the second lighting state can be decreased, and the control burden is reduced.

Of course, there is a possible control example in which the first lighting state and the second lighting state are alternately repeated, and also a possible control example in which the second lighting state is performed once after the first lighting state is performed multiple times. In addition, either the first lighting state or the second lighting state may be performed first.

Next, a case where correction is performed in the calculation of step S110 will be described. Such a processing example is realized by processing by the CPU 81.

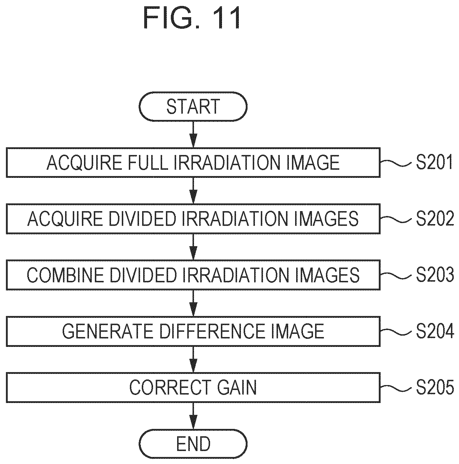

Fig. 11 is a flowchart illustrating a control example when correction is performed. The control example of Fig. 11 is an example of the processing to correct the distance with respect to one region.

In the processing example illustrated in Fig. 11, the full irradiation image is acquired (step S201) and, when the twelve divided irradiation images are acquired (step S202), the twelve divided irradiation images are combined (step S203). Accordingly, one combined image is acquired.

Then, the charge amount of the combined image is subtracted from the charge amount of the full irradiation image to generate a difference image (step S204).

The gain of the combined image is corrected by multiplying the charge amount of the combined image by the charge amount of the difference image (step S205). The multiplication described here may be performed by using the charge amount of the difference image without change, or by using the charge amount of the difference image multiplied by a coefficient. This suppresses distance measurement errors.

The correction data may be acquired at the time of setup or at a predetermined timing during distance measurement, and until then, the data before update may be used as a correction value.

Next, a more detailed specific example of the processing example illustrated in Fig. 11 will be described. The value used for the gain correction described above is hereinafter referred to as "correction parameter".

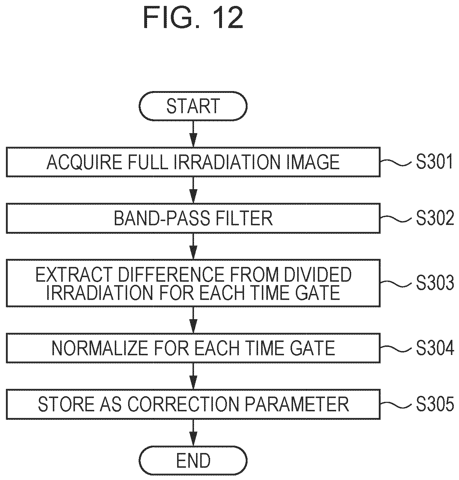

Fig. 12 is a flowchart illustrating an example of processing to generate and store a correction parameter.

In the specific example illustrated in Fig. 12, when the full irradiation image is acquired (step S301), band-pass filtering is performed to remove a noise component (step S302). The full irradiation image is the infrared image 100 (see Fig. 6C) and is obtained by visualizing the accumulated electric charges.

Then, the difference between the full irradiation image and the divided irradiation image is extracted for each time gate of a multi-tap image sensor (step S303). More specifically, when there are six taps (power storage elements), for example, the level adjustment is performed for each of the six time gate signals, and the difference is extracted. This difference is an irradiation unevenness due to the difference between the field of view (FOV) and the field of illumination (FOI) during 12 times of divided irradiation or a difference in the charge amount due to a difference in gain of the sensor. There is no difference between the FOV and the FOI in the full irradiation image.

The taps described here are formed of different semiconductor elements. When there are variations in the six time gate characteristics, adjustment is required for each time gate. Therefore, the correction is performed for each time gate.

For further explanation, the acquired image is, for example, pixel data of 480 × 720. The frame rate can be selected in a range up to 30 fps (frames per second). When reflected light is received, an electric charge is accumulated in each pixel. When the resolution of the accumulated electric charge in one pixel is 12 bits, 4096 gradations can be expressed.

In each of the six time gates, the opening order is set in a time unit.

Data of the charge amount of each pixel is acquired for each of the above-described taps. The data structure has six taps as one set.

Returning back to Fig. 12, the description will be continued.

For each of the six time gates (6 Tap), the above-described difference is normalized (step S304). Then, the normalized value is stored as a correction parameter (step S305). The stored correction parameter can be used for the subsequent distance measurement.

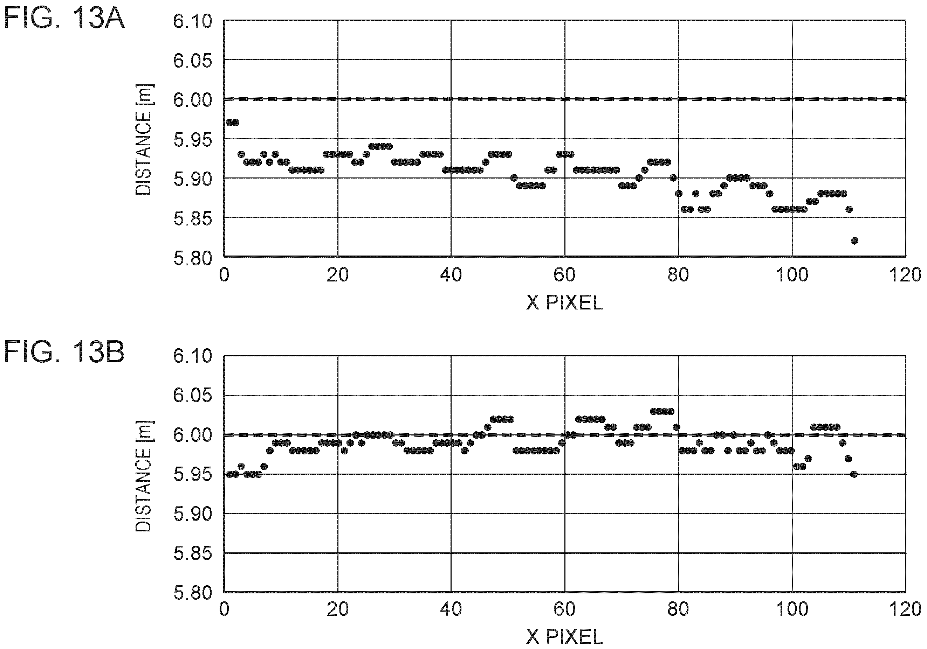

Figs. 13A and 13B are graphs illustrating a case where a distance image is calculated from a divided irradiation image. Fig. 13A illustrates the case of the acquired divided irradiation image, and Fig. 13B illustrates the case of the corrected divided irradiation image. Figs. 13A and 13B illustrate average values for several frames with the vertical axis representing the distance (m) and the horizontal axis representing the X-pixel indicating the position.

As an example, a case where distance measurement is performed on an object located at a distance of 6 m will be described. In Figs. 13A and 13B, the position of 6 m is indicated by a broken line.

Figs. 13A and 13B illustrate the divided irradiation images before and after the correction, respectively.

According to the divided irradiation image before correction illustrated in Fig. 13A, the data has variations in the distance to the object in a range from 5.85 to 5.95 m.

On the other hand, according to the corrected divided irradiation image illustrated in Fig. 13B, the distance to the object is close to 6 m indicated by a broken line. This is because the inclination and the height of the distance measurement value is corrected by the correction.

Next, a case where a part of the irradiation light from the light emitting unit 4 (for example, see Fig. 5) toward the object is reflected by, for example, a highly reflective material (not illustrated) will be described. When the irradiation light is reflected by the highly reflective material, indirect light due to the highly reflective material may enter the light receiving unit 5 (see, for example, Fig. 5) in addition to the reflected light from the object. Such indirect light is noise of unintended light and affects the distance measurement value. Therefore, according to the present exemplary embodiment, the following processing is performed in order to suppress the influence of the indirect light on the distance measurement value.

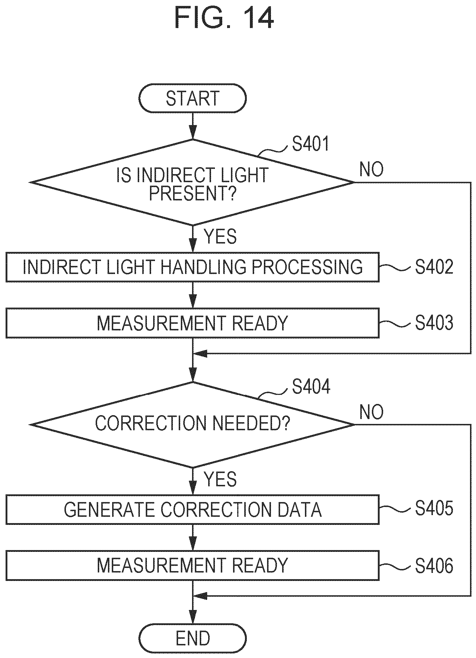

Fig. 14 is a flowchart illustrating an example of processing including processing to suppress the influence of indirect light. This processing example is performed by the control unit 8 (see Fig. 1).

In the processing example illustrated in Fig. 14, light is emitted from the light emitting unit 4 (see, for example, Fig. 5) toward the object, and it is determined whether indirect light is present in the irradiation image (step S401). This determination is made by calculating the difference between the amount of received light of the full irradiation image and the amount of received light of the divided irradiation image and determining whether the difference is larger than a predetermined threshold.

More specifically, it is assumed that the light emitting unit 4 (see, for example, Fig. 5) conducts full irradiation and the light receiving unit 5 (see, for example, Fig. 5) receives indirect light. When the light receiving unit 5 receives indirect light, the amount of light received by the light receiving unit 5 increases by the amount of the indirect light as compared with the case where the light receiving unit 5 receives no indirect light. Therefore, when the difference between the amount of received light of the full irradiation image and the amount of received light of the divided irradiation image is larger than the predetermined threshold, it is determined that indirect light is present in the irradiation image (Yes in step S401). When the difference is not larger than the predetermined threshold, it is determined that no indirect light is present in the irradiation image (No in step S401).

The amount of received light of the divided irradiation image here may be a total value of the amounts of received light of the respective divided irradiation images in the case of being divided into 12, or may be the amount of received light of the combined image (see step S203 of Fig. 11) obtained by combining the divided irradiation images as described above. In addition to the case where the number of divisions is 12 as described above (see Fig. 5), a case where the number of divisions is less than 12 by causing a plurality of light emitting sections to emit light at the same time is also considered.

When it is determined that indirect light is present (Yes in step S401), indirect light handling processing is performed (step S402), a measurement ready state is set (step S403), and a standby state is kept until a distance measurement instruction is received. As a result, the irradiation amount of the corresponding light emitting section is reduced in the next irradiation.

When it is determined that no indirect light is present (No in step S401), the processing proceeds to step S404 described below. When it is determined that no indirect light is present, the processing may proceed to step S403, and a standby state may be kept until a distance measurement instruction is received.

The indirect light handling processing described here identifies a light receiving section that has indirect light among the light receiving sections C1 to C12 (see Fig. 4) and reduces the irradiation amount of the light emitting section corresponding to the identified light receiving section. That is, the CPU 81 (see Fig. 1) stores, in the RAM 83 (see Fig. 1), the information identifying the corresponding light emitting section and the information specifying the reduced irradiation amount for the identified light emitting section.

In Fig. 14, steps S401 to S403 are preprocessing performed before the correction processing of the divided irradiation image.

More specifically, there is a possible example in which steps S401 to S403 are omitted and the preprocessing is not performed. In such an example, the processing is performed from step S404 described below.

When a distance measurement instruction is received, the correction processing of the divided irradiation image is performed as illustrated in steps S404 to S406 described below.

In response to the distance measurement instruction, the light emitting unit 4 and the light receiving unit 5 (see Fig. 5) are driven and controlled. Accordingly, the divided irradiation image described above is acquired (for example, see step S202 in Fig. 11).

Then, it is determined whether the divided irradiation image needs to be corrected (step S404). This determination is made based on whether the divided irradiation image satisfies a predetermined condition.

The predetermined condition described here may be, for example, a condition that the difference between the amount of received light at the center and the amount of received light at the edge is larger than a threshold when the region of the acquired divided irradiation image is divided into the center and the edge. When the difference is larger than the threshold, it is determined that correction is needed (Yes in step S404), and when the difference is equal to or smaller than the threshold, it is determined that correction is not needed (No in step S404).

Here, the center refers to a region that does not include the edge portions of the four sides of the divided irradiation image, and the edge refers to a region of the edge portions of the four sides of the divided irradiation image. The boundary between the central region and the edge region may be uniformly determined.

The predetermined condition described here may be, for example, whether the average of the amount of received light at the center and/or the average of the amount of received light at the edge is larger than a threshold when the region of the acquired divided irradiation image is divided into the center and the edge.

When it is determined in step S404 that the correction is needed (Yes in step S404), correction data is generated by performing the processing illustrated in steps S301 to S304 (see Fig. 12) described above (step S405). The generated correction data is stored as the correction parameter described above (see step S305 in Fig. 12).

After storing the correction data, a measurement ready state is set (step S406), and a standby state is kept until the subsequent distance measurement instruction is received.

### <Modification of Lighting States of Light Sources 410 to 440>

Next, a modification of the lighting states of the light sources 410 to 440 will be described.

Figs. 15A and 15B are diagrams illustrating the lighting states of the plurality of light sources 410 to 440 according to a modification. Fig. 15A illustrates a state where the single light emitting section A1 is turned on, and Fig. 15B illustrates a state where the plurality of light emitting sections A1 to A12 is turned on.

The lighting state illustrated in Fig. 15A is a state where the light emitting section A1 of each of the light sources 410 to 440 is turned on. That is, all of the four light sources 410 to 440 are turned on (four lighting). In addition, only the one light emitting section A1 is turned on, and the other light emitting sections A2 to A12 are not turned on. In this respect, this modification is the same as the case of Fig. 8A described above.

The lighting state illustrated in Fig. 15B is a state where the light source 440 among the light sources 410 to 440 is turned on. That is, the one light source 440 among the four light sources 410 to 440 is turned on, and the other light sources 410 to 430 are not turned on (one lighting). The light emitting sections A1 to A12 are turned on in the light source 440. In this respect, this modification differs from the case of Fig. 9A, which involves four lighting described above.

In the light emitting unit 4, the light source 440 enters the lighting states as illustrated in Figs. 15A and 15B. In addition, the light sources 410 to 430 enter the lighting state illustrated in Fig. 15A and do not enter the lighting state illustrated in Fig. 15B. The driving of the lighting state according to the modification is performed by the light emission drive unit 6 (see Fig. 1).

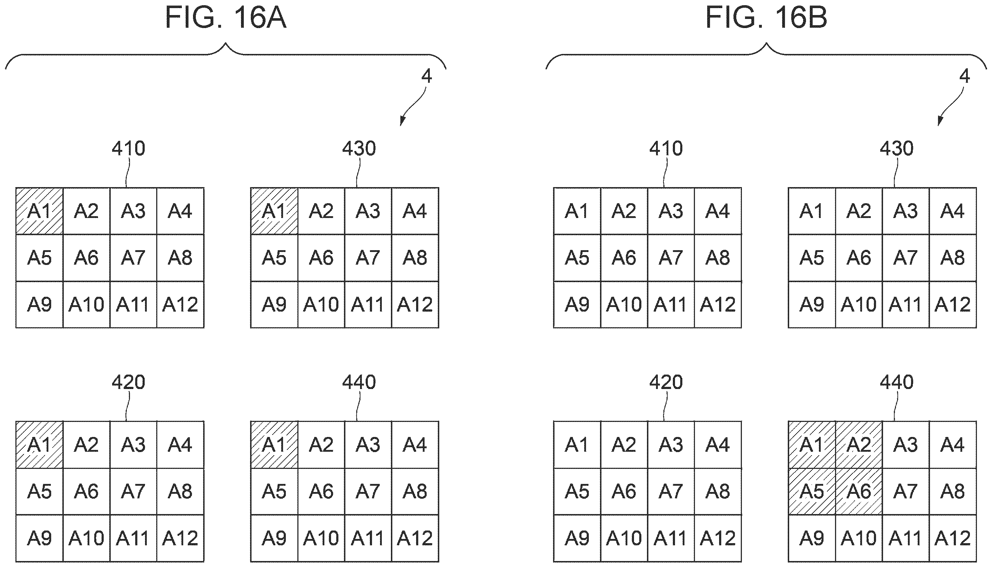

Figs. 16A and 16B are diagrams illustrating the lighting states of the plurality of light sources 410 to 440 according to another modification. Fig. 16A illustrates a state where the single light emitting section A1 is turned on, and Fig. 16B illustrates a state where the plurality of light emitting sections A1, A2, A5, and A6 is turned on.

The lighting state illustrated in Fig. 16A is a state where the light emitting section A1 of each of the light sources 410 to 440 is turned on. That is, all of the four light sources 410 to 440 are turned on (four lighting). In addition, only the one light emitting section A1 is turned on, and the other light emitting sections A2 to A12 are not turned on. In this respect, this modification is the same as the case of Fig. 8A described above.

The lighting state illustrated in Fig. 16B is a state where the light source 440 among the light sources 410 to 440 is turned on. That is, the one light source 440 among the four light sources 410 to 440 is turned on, and the other light sources 410 to 430 are not turned on (one lighting). The light emitting sections A1, A2, A5, and A6 are turned on in the light source 440 among the light emitting sections A1 to A12, and the other light emitting sections A3, A4, and A7 to A12 are not turned on. In this respect, this modification differs from the case of Fig. 9A, which involves four lighting described above.

Although Fig. 16A illustrates a case where the single light emitting section A1 is turned on, a case where another single light emitting section is turned on will be described.

For example, when the single light emitting section A2 is turned on, the plurality of light emitting sections A1 to A3 and A5 to A7 including the light emitting section A2 is turned on. Thus, the plurality of light emitting sections may be light emitting sections located around the single light emitting section.

The lighting state illustrated in Fig. 16B indicates a state where only the light source 440 is turned on and a part of the light emitting sections A1 to A12 is turned on, but is not limited thereto. For example, a state where the light sources 410 to 440 are turned on and a part of the light emitting sections A1 to A12 is turned on may be considered.

### (Distance Measurement Apparatus 1)

The distance measurement apparatus 1, which is illustrated by a solid line in Fig. 1, is an example of the distance measurement system 1 that includes the light emitting unit 4 in which the plurality of light sources 410 to 440 is provided, each including the plurality of light emitting sections A1 to A12 capable of emitting light individually, the light receiving unit 5 that receives reflected light from the light emitting unit 4, and the CPU 81, and the CPU 81 drives the light emitting unit 4 so as to have the first lighting state where the one light emitting section A1 that emits light toward the one region B1 is turned on in each of the plurality of light sources 410 to 440 provided and the second lighting state where the plurality of light emitting sections A1 to A12 including the one light emitting section A1 is simultaneously turned on in at least a part of the light sources 410 to 440, acquires the first light reception result, which is a result of light reception by the light receiving unit 5 in the case of the first lighting state and the second light reception result, which is a result of light reception by the light receiving unit 5 in the case of the second lighting state, and by using the acquired first light reception result and the acquired second light reception result, performs correction processing to correct the distance to the one region B1 measured based on the first light reception result.

The present disclosure is also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents. Appendix
(((1))) A distance measurement system comprising:
   a light emitting unit in which a plurality of light sources is provided, the light sources each including a plurality of light emitting sections capable of emitting light individually;
   a light receiving unit that receives reflected light from the light emitting unit; and
   a processor configured to:
      drive the light emitting unit so as to have a first lighting state where one light emitting section that emits light toward one region is turned on in each of the plurality of light sources provided and a second lighting state where a plurality of light emitting sections including the one light emitting section is simultaneously turned on in at least a part of the light sources;
      acquire a first light reception result, which is a result of light reception by the light receiving unit in a case of the first lighting state, and a second light reception result, which is a result of light reception by the light receiving unit in a case of the second lighting state; and
      by using the acquired first light reception result and the acquired second light reception result, perform correction processing to correct a distance to the one region measured based on the first light reception result.
(((2))) The distance measurement system according to (((1))), wherein the processor is configured to, by using a difference between the first light reception result and the second light reception result, perform processing to correct the distance to the one region measured based on the first light reception result.
(((3))) The distance measurement system according to (((1))) or (((2))), wherein the processor is configured to switch between cases where the light sources in the first lighting state and at least the part of the light sources in the second lighting state are all of the plurality of light sources or a part of the plurality of light sources.
(((4))) The distance measurement system according to (((3))), wherein a number of the light sources in the first lighting state is same as a number of at least the part of the light sources in the second lighting state.
(((5))) The distance measurement system according to any one of (((1))) to (((4))), wherein the processor is configured to perform the correction processing when the first light reception result satisfies a predetermined condition.
(((6))) The distance measurement system according to (((5))), wherein the predetermined condition is that, when the first light reception result is divided into a center and an edge, a difference between the center and the edge is larger than a threshold.
(((7))) The distance measurement system according to (((2))), wherein the processor is configured to, when the difference exceeds a predetermined value, perform processing to reduce an influence of indirect light on the first light reception result before the distance to the one region is corrected.

According to (((1))) of the present disclosure, it is possible to reduce errors in the measured distance as compared to a case where a result of light reception is used without correction.

According to (((2))) of the present disclosure, it is possible to reduce errors in the measured distance as compared to a case where a result of light reception is used without correction.

According to (((3))) of the present disclosure, it is possible to cope with various situations as compared to the case without the configuration in which the processor switches between cases where the light sources in the first lighting state and at least the part of the light sources in the second lighting state are all of the plurality of light sources or a part of the plurality of light sources.

According to (((4))) of the present disclosure, it is possible to enhance the effect of correction as compared to the case without the configuration in which the number of the light sources in the first lighting state is the same as the number of at least the part of the light sources in the second lighting state.

According to (((5))) of the present disclosure, it is possible to reduce the processing load as compared to the case without the configuration in which the processor performs the correction processing when the first light reception result satisfies a predetermined condition.

According to (((6))) of the present disclosure, it is possible to reduce the processing load as compared to the case without the configuration in which the predetermined condition is that, when the first light reception result is divided into a center and an edge, a difference between the center and the edge is larger than a threshold.

According to (((7))) of the present disclosure, it is possible to further reduce errors in the measured distance as compared to the case without the configuration in which, when the difference exceeds a predetermined value, the processor performs processing to reduce an influence of indirect light on the first light reception result before the distance to the one region is corrected.

## Claims

1. A distance measurement system comprising:
a light emitting unit in which a plurality of light sources is provided, the light sources each including a plurality of light emitting sections capable of emitting light individually;
a light receiving unit that receives reflected light from the light emitting unit; and
a processor configured to:
drive the light emitting unit so as to have a first lighting state where one light emitting section that emits light toward one region is turned on in each of the plurality of light sources provided and a second lighting state where a plurality of light emitting sections including the one light emitting section is simultaneously turned on in at least a part of the light sources;
acquire a first light reception result, which is a result of light reception by the light receiving unit in a case of the first lighting state, and a second light reception result, which is a result of light reception by the light receiving unit in a case of the second lighting state; and
by using the acquired first light reception result and the acquired second light reception result, perform correction processing to correct a distance to the one region measured based on the first light reception result.

2. The distance measurement system according to claim 1, wherein the processor is configured to, by using a difference between the first light reception result and the second light reception result, perform processing to correct the distance to the one region measured based on the first light reception result.

3. The distance measurement system according to claim 1 or 2, wherein the processor is configured to switch between cases where the light sources in the first lighting state and at least the part of the light sources in the second lighting state are all of the plurality of light sources or a part of the plurality of light sources.

4. The distance measurement system according to claim 3, wherein a number of the light sources in the first lighting state is same as a number of at least the part of the light sources in the second lighting state.

5. The distance measurement system according to any one of claims 1 to 4, wherein the processor is configured to perform the correction processing when the first light reception result satisfies a predetermined condition.

6. The distance measurement system according to claim 5, wherein the predetermined condition is that, when the first light reception result is divided into a center and an edge, a difference between the center and the edge is larger than a threshold.

7. The distance measurement system according to claim 2, wherein the processor is configured to, when the difference exceeds a predetermined value, perform processing to reduce an influence of indirect light on the first light reception result before the distance to the one region is corrected.
